# EUROPEAN PATENT SPECIFICATION

(11) **EP 4 414 600 B1**
(45) Date of publication and mention of the grant of the patent: **16.04.2025**
(21) Application number: 23156183.8
(22) Date of filing: 10.02.2023
(51) Int. Cl.: F17C 3/00, F17C 7/02

(54) **SYSTEM AND METHOD FOR PRESSURE-MAINTENANCE OF AN INTERMEDIATE STORAGE TANK DURING LCO2 INJECTION AT AN LCO2 RECEIVING TERMINAL**
SYSTEM UND VERFAHREN ZUR DRUCKAUFRECHTERHALTUNG EINES ZWISCHENSPEICHERTANKS WÄHREND EINER LCO2-INJEKTION AN EINEM LCO2-EMPFANGSENDGERÄT
SYSTÈME ET PROCÉDÉ DE MAINTIEN DE PRESSION D'UN RÉSERVOIR INTERMÉDIAIRE DE STOCKAGE PENDANT L'INJECTION DE LCO2 AU NIVEAU D'UN TERMINAL RÉCEPTEUR LCO2

(43) Date of publication of application: 14.08.2024
(73) Proprietor: Horisont Energi AS, 4313 Sandnes (NO)
(72) Inventor: FELBAB, Nikola, 4313 SANDNES (NO)
(74) Representative: Brann AB

(56) References cited:
- WO-A1-2005/075882
- KR-A- 20110 123 056
- US-A- 5 177 974
- NOH HYONJEONG ET AL: "Conceptualization of CO2 Terminal for Offshore CCS Using System Engineering Process", ENERGIES, vol. 12, no. 22, 15 November 2019 (2019-11-15), pages 4350, XP093055447, DOI: 10.3390/en12224350

## Description

### FIELD OF THE INVENTION

The present invention generally relates to carbon capture and storage (CCS) technology, and more particularly to a system and method for pressure-maintenance of an intermediate liquefied CO₂ (LCO₂) storage tank during injection into a pipeline leading into a long-term LCO₂ storage facility of LCO₂ being withdrawn from the tank at a receiving terminal connected with the long term LCO₂ storage facility. The invention uses a closed loop of a stream of LCO₂ which can be replenished with LCO₂ withdrawn from the stream of LCO₂ being directed to the long-term LCO₂ storage, which closed loop stream is fed into a tank heater in the intermediate storage tank for indirectly heating the contents of the tank, and which closed loop stream of LCO₂ can be discharged into the intermediate LCO₂ storage tank.

### BACKGROUND ART

Captured and liquefied carbon dioxide can be transported in the liquid phase (LCO₂) from various locations and customers to CO₂ receiving terminals at which the CO₂ will be temporarily stored in intermediate buffer storage tanks onshore, before being pumped in a dense phase via a pipeline and injected into an offshore long-term storage reservoir. The purpose of the buffer storage is to allow for continuous injection to the long-term storage reservoir despite intermittent LCO₂ cargo transfer from ship.

A general description of an outline of a CCS chain can be found in Conceptualization of CO₂ Terminal for Offshore CCS Using System Engineering Process by Hyonjeong et al. Energies, 2019, 12, 4350.

Discharge from an intermediate LCO₂ tank of LCO₂ to be injected into a reservoir for long-term storage will cause the pressure in the intermediate storage tank to drop. In case of operating pressures near the triple point of CO₂, it is necessary to ensure that the pressure in the tank does not drop sufficiently for dry ice to form. Standard liquefied gas terminals (e.g. LNG) counteract pressure drop by force-vaporising a portion of the liquefied gas and returning it as vapour to the tank, thereby replacing the emptied liquid volume. However, LCO₂ in CCS applications typically contains some water (e.g. 30-70 ppm by mol). The LCO₂ is mostly kept at temperatures below -20°C at the terminal, at which temperature CO₂ hydrates could potentially form. In the liquid phase of the LCO₂, the concentration of water is insufficient to form hydrates, and thus poses no problem. However, if it is passed through a force-vaporiser, the same liquid composition (including the full water content) becomes vapour, which can form hydrates either in the vaporiser itself, which could cause blockages in the vaporiser, or, during a subsequent pressure let-down back to tank pressure, in the piping downstream of a corresponding expansion valve. This is particularly likely in the case of intermediate storage operation near the triple point.

It would be desirable to be able to provide for pressure-maintenance of an intermediate LCO₂ storage tank during discharge of LCO₂ from the tank so as to avoid formation of dry ice in the intermediate LCO₂ storage tank during LCO₂ discharge from the tank, while at the same time reducing the risk of undesired formation of hydrates from water contained in the LCO₂.

It is an object of the present invention to provide a system and a method enabling the above.

### SUMMARY OF THE INVENTION

According to the invention, the above object has been achieved by using indirect liquid-to-liquid heat exchange using LCO₂, wherein a closed loop, in which LCO₂ is being circulated and heated, is used for carrying heat to the storage tank for maintaining pressure in the storage tank during discharge of LCO₂ from the tank. The closed loop can be charged as needed with a slip stream of LCO₂, which slip stream can withdrawn from the stream of LCO₂ being discharged from the intermediate tank. The closed loop can be discharged into the storage tank as needed.

Accordingly, in one aspect the invention relates to a system a system **110** configured to maintaining a desired pressure in a discharging intermediate LCO₂ tank **10** during discharging of LCO₂ from the tank thereby avoiding formation of dry ice in the intermediate LCO₂ storage tank during the LCO₂ discharge from the tank, which system avoids or reduces the risk of formation of hydrates in the system from water contained in the LCO₂, comprising: an intermediate LCO₂ storage tank **10;** an LCO₂ discharge conduit **41, 43, 80, 82, 31** connected to the intermediate LCO₂ storage tank **10** configured to discharge LCO₂ to be injected into a long-term CO2 storage **1;** a first LCO₂ pump **15** arranged along the discharge conduit **41, 43, 80, 82, 31;** an injection pump **17** arranged along the discharge conduit **41, 43, 80, 82, 31** downstream of the first LCO₂ pump **15;** an LCO₂ heater **19** arranged along the discharge conduit **41, 43, 80, 82, 31** downstream of the LCO₂ injection pump **17,** which system additionally comprises a tank heater **11** configured to receive and to transfer heat from a fluid stream being led through the tank heater **11** to the contents of the intermediate storage tank **10;** a closed heating medium loop **81, 83, 84, 86, 85, 87; 81, 83, 84** including the tank heater **11** configured to circulate within the loop, as the fluid stream, a stream of LCO₂; a recirculation pump **91** arranged along the closed heating medium loop **81, 83, 84, 86, 85, 87; 81, 83, 84** configured to recirculate within the loop the stream of LCO₂; a loop heater **97; 98** configured to heat the stream of LCO₂ being recirculated within the closed heating medium loop **81, 83, 84, 86, 85, 87; 81, 83, 84**; a charging valve **93** arranged on a charging conduit connecting the discharge conduit **41, 43, 80, 82, 31** with the closed heating medium loop **81, 83, 84, 86, 85, 87; 81, 83, 84**, which charging valve is configured to enabling, when in an open position, introduction of LCO₂ from the discharge conduit **41, 43, 80, 82, 31** into the closed heating medium loop **81, 83, 84, 86, 85, 87; 81, 83, 84**; and, a discharging valve **95** arranged along the closed heating medium loop **81, 83, 84, 86, 85, 87; 81, 83, 84** configured to enabling, when in an open position, discharge of LCO₂ from the discharge conduit **41, 43, 80, 82, 31** into the closed heating medium loop **81, 83, 84, 86, 85, 87; 81, 83, 84**.

In another aspect the invention refers to a method for maintaining a sufficient pressure in a discharging intermediate LCO₂ tank **10** during discharge of LCO₂ from the tank for avoidance of formation of dry ice in the intermediate LCO₂ storage tank during discharge, which system avoids or reduces the risk of formation of hydrates in the system from water contained in the LCO₂, said method comprising the following steps: **A** discharging a stream of LCO₂ from an intermediate LCO₂ storage tank **10; B** subjecting the stream of LCO₂ from step **A** to pumping in a first LCO₂ pump **15; C** subjecting the stream of LCO₂ from step **B** to pumping in an injection pump **17; D** subjecting the stream of LCO₂ from step **C** to heating in an LCO₂ heater **19** which method additionally comprises the following steps: **E** circulating LCO₂ in a closed heating medium loop **81, 11, 83, 84, 86, 85, 87; 81, 11, 83, 84; F** transferring heat from the circulating LCO₂ to the contents of the intermediate LCO₂ tank **10; G** heating the circulating LCO₂.

Further embodiments and advantages of the invention will be apparent from the following detailed description and appended claims.

In the present disclosure, same reference numeral is used both to denote the conduit and the stream flowing therein. For example, reference numeral **41** is used to both denote the discharge stream conduit connected to the intermediate LCO₂ storage tank, and also to denote the discharge stream itself flowing in said conduit.

The term "intermediate storage" as used herein denotes a storage intended to be temporary, prior to a long-term storage.

The term "long-term storage" as used herein denotes a storage intended to be permanent.

### BRIEF DESCRIPTION OF THE ATTACHED DRAWINGS

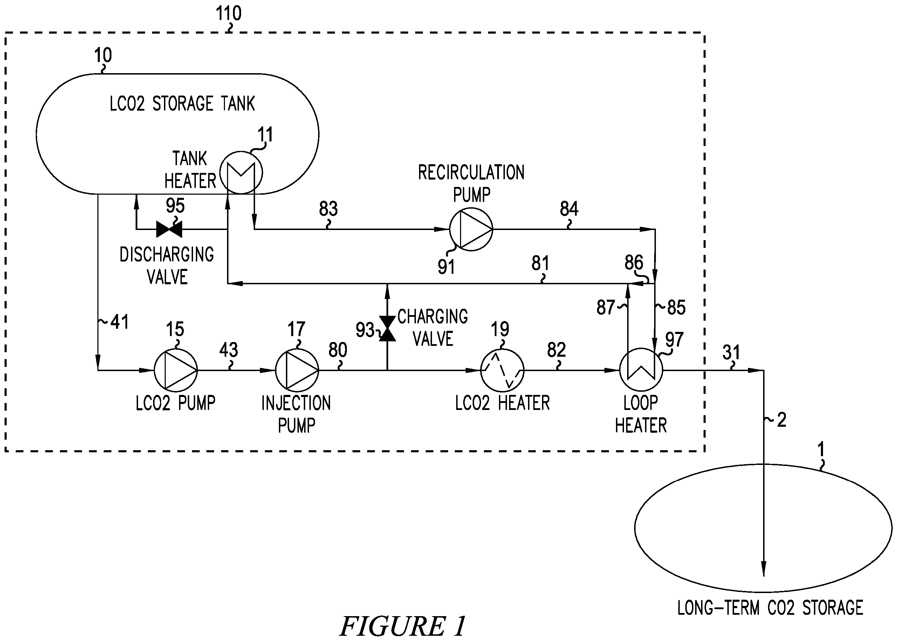

Figure 1 shows an embodiment of the inventive system **110** as indicated by the dashed line, which system is configured to be implemented into an LCO₂ receiving terminal, which system includes a loop heater **97** configured to receive heat from the LCO₂ stream in the discharge conduit **41, 43, 80, 82, 31** at a location downstream of the LCO₂ heater **19** and to transfer said heat to the closed loop stream.

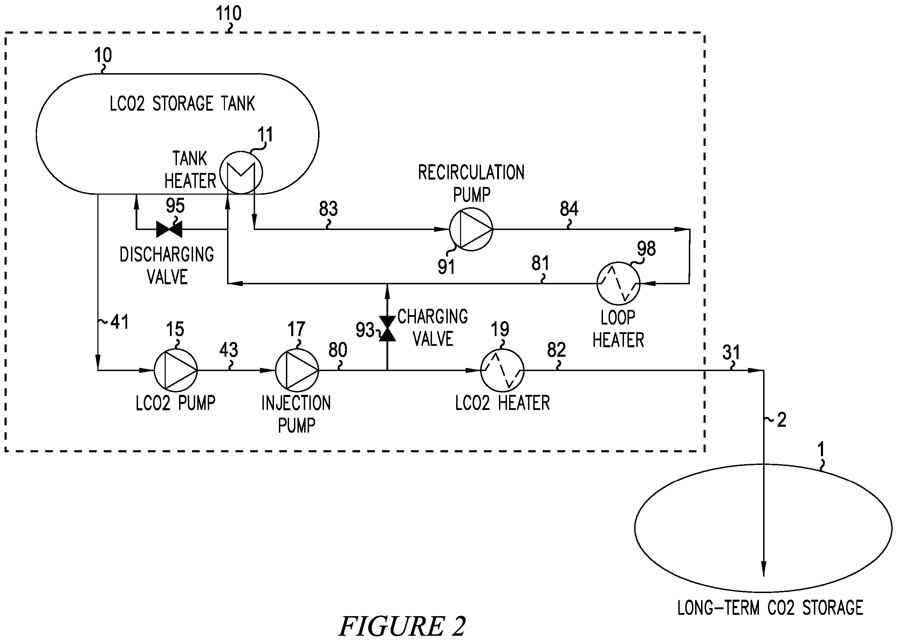

Figure 2 shows another embodiment of the inventive system **110** as indicated by the dashed line, which system includes a loop heater **98** arranged along the heating medium closed loop **81, 11, 83, 84** at a location upstream of the charging valve **93.**

### DETAILED DESCRIPTION OF THE INVENTION

According to the present invention a desired pressure in a discharging intermediate LCO₂ storage tank **10** can be maintained during discharging of LCO₂ from the tank **10,** thereby avoiding formation of dry ice in the intermediate LCO₂ storage tank during the LCO₂ discharge from the tank. The invention also avoids or reduces the risk of formation of hydrates in the system from water contained in the LCO₂. Since the LCO₂ in CCS applications, and hence also in the intermediate LCO₂ storage tank **10,** typically contains some water, it is desirable to prevent the full liquid composition from becoming vapour. According to the present invention pressure in the intermediate LCO₂ storage tank **10** is maintained during injection by heating the liquid in the intermediate LCO₂ storage tank to sustain its vapour pressure (bubble point pressure) at the required tank pressure, effectively increasing the heat ingress into the tank in a controlled way. The source of heating is a closed loop LCO₂ stream which is introduced as an indirect heat source to a tank heater **11,** either as an immersed heater (such as a tube bundle, coil bundle, plate pack, or similar), or as an external heater (such as a jacket or coil on the external tank surface). This has the advantage that the heat exchange medium is the LCO₂ itself, and will thus not be prone to freezing when it heats the tank contents. In the case of an immersed heater, any rupture will not cause undesirable contamination of the LCO₂ in the storage tanks, as the fluid on both sides of the tank heater is the same. The LCO₂ used for heating is additionally kept in the liquid phase, and thus avoids the risk of hydrate formation itself. The closed loop LCO₂ stream can be replenished with LCO2 as required via charging valve **93,** and can be discharged from the closed loop LCO₂ stream as required via discharging valve **95.**

After heat exchange in tank heater **11,** the cooled closed loop stream of LCO₂ exiting the tank heater at **83** is circulated by recirculation pump **91** further to the loop heater **(97** or **98,** depending on embodiment).

With reference to the drawings, the slip stream is taken downstream of the LCO₂ injection pump **17,** from conduit **80.** In a preferred embodiment, the charging conduit is located as a position downstream of the injection pump **17** and upstream of the LCO₂ heater **19.**

The slip stream can in principle be withdrawn from any point on the stream of LCO₂ being discharged from the intermediate tank.

According to the invention a closed loop of LCO₂ is used as heat transfer medium, where the LCO₂ can be charged into the closed loop from the discharge stream **41, 43, 80, 82, 31,** corresponding to the stream of LCO₂ from any one of steps **B, C,** and **D** of the inventive method, and discharged back to the intermediate LCO₂ storage tank **10** as needed. The closed loop is charged when needed, typically if the loop pressure falls below a preset minimum loop pressure. Analogously, the closed loop is discharged when needed, typically if the loop pressure rises above a preset maximum loop pressure.

In a preferred embodiment, the LCO₂ is charged into the closed loop from a position on the discharge stream **41, 43, 80, 82, 31,** downstream of the injection pump **17** and upstream of the LCO₂ heater **19,** i.e. from stream **80,** corresponding to the stream of LCO₂ from step **C** of the inventive method.

When the system includes a loop heater **97** configured to receive heat from the LCO₂ stream in the discharge conduit **41, 43, 80, 82, 31,** said loop heater **97** should be arranged at a location of discharge conduit downstream of the LCO₂ heater **19.**

The LCO₂ in the closed heating loop is circulated using a recirculation pump **91.** It is heated either by heat exchange with the warm, high-pressure LCO₂ to be injected into the pipeline **2** (as shown in **Fig. 1****),** or with a separate heater (as shown in **Fig. 2****),** and it transfers this heat to the liquid in the intermediate LCO₂ storage tank **10** via the tank heater **11.**

### LIST OF REFERENCE SIGNS USED

- 1: underground long term storage facility
- 2: pipeline
- 10: intermediate LCO₂ storage tank
- 11: tank heater
- 15: first LCO₂ pump on LCO₂ discharge conduit
- 17: injection pump
- 19: LCO₂ heater
- 41, 43, 80, 82, 31: LCO₂ discharge conduit
- 81, 83, 84, 86, 85, 87: closed heating medium loop
- 81, 83, 84: closed heating medium loop
- 91: recirculation pump
- 93: closed loop charging valve
- 95: closed loop discharging valve
- 97: closed loop heater
- 98: closed loop heater
- 110: pressure maintaining system

## Claims

1. A system (110) configured to maintaining a desired pressure in a discharging intermediate LCO₂ tank (10) during discharging of LCO₂ from the tank thereby avoiding formation of dry ice in the intermediate LCO₂ storage tank during the LCO₂ discharge from the tank, which system avoids or reduces the risk of formation of hydrates in the system from water contained in the LCO₂, comprising:
- an intermediate LCO₂ storage tank (10);
- an LCO₂ discharge conduit (41, 43, 80, 82, 31) connected to the intermediate LCO₂ storage tank (10) configured to discharge LCO₂ to be injected into a long-term CO2 storage (1);
- a first LCO₂ pump (15) arranged along the discharge conduit (41, 43, 80, 82, 31);
- an injection pump (17) arranged along the discharge conduit (41, 43, 80, 82, 31) downstream of the first LCO₂ pump (15);
- an LCO₂ heater (19) arranged along the discharge conduit (41, 43, 80, 82, 31) downstream of the LCO₂ injection pump (17);
**characterized in** additionally comprising,
- a tank heater (11) configured to receive and to transfer heat from a fluid stream being led through the tank heater (11) to the contents of the intermediate storage tank (10);
- a closed heating medium loop (81, 83, 84, 86, 85, 87; 81, 83, 84) including the tank heater (11) configured to circulate within the loop, as the fluid stream, a stream of LCO₂;
- a recirculation pump (91) arranged along the closed heating medium loop (81, 83, 84, 86, 85, 87; 81, 83, 84) configured to recirculate within the loop the stream of LCO₂;
- a loop heater (97; 98) configured to heat the stream of LCO₂ being recirculated within the closed heating medium loop (81, 83, 84, 86, 85, 87; 81, 83, 84);
- a charging valve (93) arranged on a charging conduit connecting the discharge conduit (41, 43, 80, 82, 31) with the closed heating medium loop (81, 83, 84, 86, 85, 87; 81, 83, 84), which charging valve is configured to enabling, when in an open position, introduction of LCO₂ from the discharge conduit (41, 43, 80, 82, 31) into the closed heating medium loop (81, 83, 84, 86, 85, 87; 81, 83, 84); and,
- a discharging valve (95) arranged along the closed heating medium loop (81, 83, 84, 86, 85, 87; 81, 83, 84) configured to enabling, when in an open position, discharge of LCO₂ from the discharge conduit (41, 43, 80, 82, 31) into the closed heating medium loop (81, 83, 84, 86, 85, 87; 81, 83, 84).

2. The system of claim 1, wherein the loop heater (97) is arranged along the heating medium closed loop (81, 83, 84, 86, 85, 87) and is configured to receive heat from the LCO₂ stream in the discharge conduit (41, 43, 80, 82, 31) at a location downstream of the LCO₂ heater (19).

3. The system of claim 1, wherein the loop heater (98) is arranged along the heating medium closed loop (81, 11, 83, 84).

4. A method for maintaining a sufficient pressure in a discharging intermediate LCO₂ tank (10) during discharge of LCO₂ from the tank for avoidance of formation of dry ice in the intermediate LCO₂ storage tank during discharge, which system avoids or reduces the risk of formation of hydrates in the system from water contained in the LCO₂, said method comprising the following steps:
A) discharging a stream of LCO₂ from an intermediate LCO₂ storage tank (10);
B) subjecting the stream of LCO₂ from step (A) to pumping in a first LCO₂ pump (15);
C) subjecting the stream of LCO₂ from step (B) to pumping in an injection pump (17);
D) subjecting the stream of LCO₂ from step (C) to heating in an LCO₂ heater (19)
**characterized in** additionally comprising the following steps:
E) circulating LCO₂ in a closed heating medium loop (81, 11, 83, 84, 86, 85, 87; 81, 11, 83, 84);
F) transferring heat from the circulating LCO₂ to the contents of the intermediate LCO₂ tank (10);
G) heating the circulating LCO₂;

5. The method of claim 4, wherein a partial flow of the stream of LCO₂ from any one of steps (B), (C), and (D), preferably from step (C), is charged as needed into the closed heating medium loop (81, 11, 83, 84, 86, 85, 87; 81, 11, 83, 84).

6. The method of claim 4 or 5, wherein LCO₂ from the closed heating medium loop (81, 11, 83, 84, 86, 85, 87; 81, 11, 83, 84) is discharged as needed into the intermediate LCO₂ tank (10).

7. The method of any one of claims 4-6, wherein the heating in step (G) is achieved by transferring heat from a stream of LCO₂ from step (D).

8. The method of any one of claims 4-6, wherein the heating in step (G) is achieved by transferring heat from a different source than a stream of LCO₂.

## Patentansprüche

1. System (110), das konfiguriert ist, einen gewünschten Druck in einem abgebenden LCO₂-Zwischentank (10) während der Abgabe von LCO₂ aus dem Tank aufrechtzuerhalten, wodurch die Bildung von Trockeneis im LCO₂-Zwischenspeichertank während der LCO₂-Abgabe aus dem Tank vermieden wird, wobei das System das Risiko der Bildung von Hydraten im System aus im LCO₂ enthaltenem Wasser vermeidet oder verringert, das aufweist:
- einen LCO₂-Zwischenspeichertank (10);
- eine LCO₂-Abgabeleitung (41, 43, 80, 82, 31), die mit dem LCO₂-Zwischenspeichertank (10) verbunden und konfiguriert ist, LCO₂ abzugeben, das in einen Langzeit-CO₂-Speicher (1) eingespritzt werden soll;
- eine erste LCO₂-Pumpe (15), die entlang der Abgabeleitung (41, 43, 80, 82, 31) angeordnet ist;
- eine Injektionspumpe (17), die entlang der Abgabeleitung (41, 43, 80, 82, 31) stromabwärts von der ersten LCO₂-Pumpe (15) angeordnet ist;
- eine LCO₂-Heizung (19), die entlang der Abgabeleitung (41, 43, 80, 82, 31) stromabwärts von der LCO₂-Einspritzpumpe (17) angeordnet ist;
**dadurch gekennzeichnet, dass** es zusätzlich aufweist:
- eine Tankheizung (11), die konfiguriert ist, Wärme von einem Fluidstrom, der durch die Tankheizung (11) geleitet wird, aufzunehmen und an den Inhalt des Zwischenspeichertanks (10) zu übertragen;
- einen geschlossenen Heizmittelkreis (81, 83, 84, 86, 85, 87; 81, 83, 84), der die Tankheizung (11) umfasst, der konfiguriert ist, innerhalb des Kreises als den Fluidstrom einen LCO₂-Strom umzuwälzen;
- eine Rezirkulationspumpe (91), die entlang des geschlossenen Heizmittelkreises (81, 83, 84, 86, 85, 87; 81, 83, 84) angeordnet und konfiguriert ist, den LCO₂-Strom innerhalb des Kreises zu rezirkulieren;
- eine Kreisheizung (97; 98), die konfiguriert ist, den LCO₂-Strom zu erwärmen, der innerhalb der geschlossenen Heizmittelkreises (81, 83, 84, 86, 85, 87; 81, 83, 84) rezirkuliert wird;
- ein Ladeventil (93), das an einer Ladeleitung angeordnet ist, die die Abgabeleitung (41, 43, 80, 82, 31) mit dem geschlossenen Heizmittelkreis (81, 83, 84, 86, 85, 87; 81, 83, 84) verbindet, wobei das Ladeventil so konfiguriert ist, in einer offenen Position ein Einleiten von LCO₂ aus der Abgabeleitung (41, 43, 80, 82, 31) in den geschlossenen Heizmittelkreis (81, 83, 84, 86, 85, 87; 81, 83, 84) zu ermöglichen; und
- ein Abgabeventil (95), das entlang des geschlossenen Heizmittelkreises (81, 83, 84, 86, 85, 87; 81, 83, 84) angeordnet und konfiguriert ist, in einer offenen Position eine Abgabe von LCO₂ aus der Abgabeleitung (41, 43, 80, 82, 31) in den geschlossenen Heizmittelkreis (81, 83, 84, 86, 85, 87; 81, 83, 84) zu ermöglichen.

2. System nach Anspruch 1, wobei die Kreisheizung (97) entlang des geschlossenen Heizmittelkreises (81, 83, 84, 86, 85, 87) angeordnet und konfiguriert ist, Wärme aus dem LCO₂-Strom in der Abgabeleitung (41, 43, 80, 82, 31) an einer Stelle stromabwärts von der LCO₂-Heizung (19) aufzunehmen.

3. System nach Anspruch 1, wobei die Kreisheizung (98) entlang des geschlossenen Heizmittelkreises (81, 11, 83, 84) angeordnet ist.

4. Verfahren zum Aufrechterhalten eines ausreichenden Drucks in einem abgebenden LCO₂-Zwischentank (10) während der Abgabe von LCO₂ aus dem Tank zur Vermeidung der Bildung von Trockeneis im LCO₂-Zwischenspeichertank während der Abgabe, wobei das System das Risiko der Bildung von Hydraten im System aus im LCO₂ enthaltenem Wasser vermeidet oder reduziert, wobei das Verfahren die folgenden Schritte aufweist:
A) Abgeben eines LCO₂-Stroms aus einem LCO₂-Zwischenspeichertank (10);
B) Unterziehen des LCO₂-Stroms aus Schritt (A) einem Pumpen in einer ersten LCO₂-Pumpe (15);
C) Unterziehen des LCO₂-Stroms aus Schritt (B) einem Pumpen in einer Einspritzpumpe (17);
D) Unterziehen des LCO₂-Stroms aus Schritt (C) einer Erwärmung in einer LCO₂-Heizung (19),
**dadurch gekennzeichnet, dass** es zusätzlich die folgenden Schritte aufweist:
E) Umwälzen von LCO₂ in einem geschlossenen Heizmittelkreis (81, 11, 83, 84, 86, 85, 87; 81, 11, 83, 84);
F) Übertragen von Wärme von dem zirkulierenden LCO₂ auf den Inhalt des LCO₂-Zwischentanks (10);
G) Erwärmen des zirkulierenden LCO₂.

5. Verfahren nach Anspruch 4, wobei ein Teilstrom des LCO₂-Stroms aus einem der Schritte (B), (C) und (D), vorzugsweise aus Schritt (C), nach Bedarf in den geschlossenen Heizmittelkreis (81, 11, 83, 84, 86, 85, 87; 81, 11, 83, 84) eingeleitet wird.

6. Verfahren nach Anspruch 4 oder 5, wobei LCO₂ aus dem geschlossenen Heizmittelkreis (81, 11, 83, 84, 86, 85, 87; 81, 11, 83, 84) nach Bedarf in den LCO₂-Zwischentank (10) abgegeben wird.

7. Verfahren nach einem der Ansprüche 4 bis 6, wobei die Erwärmung in Schritt (G) durch Übertragung von Wärme aus einem LCO₂-Strom aus Schritt (D) erreicht wird.

8. Verfahren nach einem der Ansprüche 4 bis 6, wobei die Erwärmung in Schritt (G) durch Übertragung von Wärme aus einer anderen Quelle als einem LCO₂-Strom erreicht wird.

## Revendications

1. Système (110) configuré pour maintenir une pression souhaitée dans un réservoir (10) de LCO₂ intermédiaire en cours de vidage durant le vidage de LCO₂ à partir du réservoir évitant ainsi la formation de glace sèche dans le réservoir de stockage de LCO₂ intermédiaire durant le vidage de LCO₂ à partir du réservoir, lequel système évite ou réduit le risque de formation d'hydrates dans le système à partir d'eau contenue dans le LCO₂, comprenant :
- un réservoir (10) de stockage de LCO₂ intermédiaire ;
- un conduit de vidage (41, 43, 80, 82, 31) de LCO₂ relié au réservoir (10) de stockage de LCO₂ intermédiaire configuré pour vider du LCO₂ devant être injecté dans un stockage de CO2 à long terme (1) ;
- une première pompe de LCO₂ (15) agencée le long du conduit de vidage (41, 43, 80, 82, 31) ;
- une pompe d'injection (17) agencée le long du conduit de vidage (41, 43, 80, 82, 31) en aval de la première pompe de LCO₂ (15) ;
- un réchauffeur de LCO₂ (19) agencé le long du conduit de vidage (41, 43, 80, 82, 31) en aval de la pompe d'injection (17) de LCO₂ ;
**caractérisé en ce qu'**il comprend en plus,
- un réchauffeur de réservoir (11) configuré pour recevoir et pour transférer de la chaleur à partir d'un flux de fluide qui est dirigé à travers le réchauffeur de réservoir (11) vers le contenu du réservoir (10) de stockage intermédiaire ;
- une boucle de milieu chauffant fermée (81, 83, 84, 86, 85, 87 ; 81, 83, 84) comportant le réchauffeur de réservoir (11) configuré pour faire circuler dans la boucle, en tant que flux de fluide, un flux de LCO₂ ;
- une pompe de recirculation (91) agencée le long de la boucle de milieu chauffant fermée (81, 83, 84, 86, 85, 87 ; 81, 83, 84) configurée pour faire recirculer dans la boucle le flux de LCO₂ ;
- un réchauffeur de boucle (97 ; 98) configuré pour réchauffer le flux de LCO₂ qui recircule dans la boucle de milieu chauffant fermée (81, 83, 84, 86, 85, 87 ; 81, 83, 84) ;
- une vanne de remplissage (93) agencée sur un conduit de remplissage reliant le conduit de vidage (41, 43, 80, 82, 31) à la boucle de milieu chauffant fermée (81, 83, 84, 86, 85, 87 ; 81, 83, 84), laquelle vanne de remplissage est configurée pour permettre, lorsqu'elle est dans une position ouverte, l'introduction de LCO₂ à partir du conduit de vidage (41, 43, 80, 82, 31) dans la boucle de milieu chauffant fermée (81, 83, 84, 86, 85, 87 ; 81, 83, 84) ; et,
- une vanne de vidage (95) agencée le long de la boucle de milieu chauffant fermée (81, 83, 84, 86, 85, 87 ; 81, 83, 84) configurée pour permettre, lorsqu'elle est dans une position ouverte, le vidage de LCO₂ à partir du conduit de vidage (41, 43, 80, 82, 31) dans la boucle de milieu chauffant fermée (81, 83, 84, 86, 85, 87 ; 81, 83, 84).

2. Système selon la revendication 1, dans lequel le réchauffeur de boucle (97) est agencé le long de la boucle de milieu chauffant fermée (81, 83, 84, 86, 85, 87) et est configuré pour recevoir de la chaleur à partir du flux de LCO₂ dans le conduit de vidage (41, 43, 80, 82, 31) à un emplacement en aval du réchauffeur de LCO₂ (19).

3. Système selon la revendication 1, dans lequel le réchauffeur de boucle (98) est agencé le long de la boucle de milieu chauffant fermée (81, 11, 83, 84).

4. Procédé pour maintenir une pression suffisante dans un réservoir (10) de LCO₂ intermédiaire en cours de vidage durant le vidage de LCO₂ à partir du réservoir pour l'évitement de la formation de glace sèche dans le réservoir de stockage de LCO₂ intermédiaire durant le vidage, lequel système évite ou réduit le risque de formation d'hydrates dans le système à partir d'eau contenue dans le LCO₂, ledit procédé comprenant les étapes suivantes :
A) le vidage d'un flux de LCO₂ à partir d'un réservoir (10) de stockage de LCO₂ intermédiaire ;
B) le fait de soumettre le flux de LCO₂ provenant de l'étape (A) à un pompage dans une première pompe de LCO₂ (15) ;
C) le fait de soumettre le flux de LCO₂ provenant de l'étape (B) à un pompage dans une pompe d'injection (17) ;
D) le fait de soumettre le flux de LCO₂ provenant de l'étape (C) à un réchauffage dans un réchauffeur de LCO₂ (19)
**caractérisé en ce qu'**il comprend en plus les étapes suivantes :
E) la circulation de LCO₂ dans une boucle de milieu chauffant fermée (81, 11, 83, 84, 86, 85, 87 ; 81, 11, 83, 84) ;
F) le transfert de chaleur à partir du LCO₂ circulant vers le contenu du réservoir (10) de LCO₂ intermédiaire ;
G) le réchauffage du LCO₂ circulant.

5. Procédé selon la revendication 4, dans lequel un écoulement partiel du flux de LCO₂ provenant de l'une quelconque des étapes (B), (C) et (D), de préférence de l'étape (C), remplit en fonction des besoins la boucle de milieu chauffant fermée (81, 11, 83, 84, 86, 85, 87 ; 81, 11, 83, 84).

6. Procédé selon la revendication 4 ou 5, dans lequel du LCO₂ provenant de la boucle de milieu chauffant fermée (81, 11, 83, 84, 86, 85, 87 ; 81, 11, 83, 84) est vidé en fonction des besoins dans le réservoir (10) de LCO₂ intermédiaire.

7. Procédé selon l'une quelconque des revendications 4 à 6, dans lequel le réchauffage à l'étape (G) est accompli en transférant de la chaleur à partir d'un flux de LCO₂ provenant de l'étape (D).

8. Procédé selon l'une quelconque des revendications 4 à 6, dans lequel le réchauffage à l'étape (G) est accompli en transférant de la chaleur à partir d'une source différente d'un flux de LCO₂.
